# EUROPEAN PATENT SPECIFICATION

(11) **EP 3 721 761 B1**
(45) Date of publication and mention of the grant of the patent: **10.05.2023**
(21) Application number: 20168663.1
(22) Date of filing: 08.04.2020
(51) Int. Cl.: A47J 37/12

(54) **FRYER**
FRITTEUSE
FRITEUSE

(30) Priority: 11.04.2019 CH 4902019; 11.04.2019 IT 201900005570
(43) Date of publication of application: 14.10.2020
(73) Proprietor: Capogrosso, Paolo, 20125 Milano (IT)
(72) Inventor: Capogrosso, Paolo, 20125 Milano (IT)
(74) Representative: Fabiano, Piero

(56) References cited:
- EP-A1- 1 576 915
- DE-A1-102009 010 856
- DE-B4-102009 010 856
- DE-U1- 20 116 149
- DE-U1- 20 116 149
- US-A- 5 836 238
- US-A1- 2018 000 287

## Description

### Field of the invention

The present invention concerns the field of fryers and in particular a fryer designed and implemented to be able to recover the nutritional properties of foods subjected to frying and to allow to achieve crispier frying.

### Known art

As known, fryers usually consist of a tank inside which the frying oil is introduced. The food products to be fried are introduced in the oil, preferably after having been inserted in an appropriate collection basket. Moreover, known fryers are usually provided with a cover which allows to reduce fried food smells, with a thermostat which allows to control the oil temperature and with a tap to drain the oil used. A known fryer it is for example disclosed in EP1576915.

The Applicant has observed that, in known fryers, the microparticles forming the frying tank and/or any coating of the latter can easily detach themselves due to the high temperatures involved and to the particularly aggressive frying environment. When detaching themselves, the microparticles, generally made of metal, can thus contaminate the food during the frying process and subsequently be ingested by man through the fried food.

The Applicant has thus identified the need to provide a new type of fryer able to solve the problems of the known art and in particular able to provide a fryer in which the inner tank has an inner coating that cannot easily allow the detachment of microparticles and that, in case of a detachment of microparticles, the latter would not be harmful to men whenever ingested.

### Summary of the Invention

Thus the invention concerns a fryer comprising:
- a frying tank, shaped to be filled with oil up to a predetermined maximum level; said frying tank being provided with at least one basket to contain the food to be fried;
- a heating assembly;
- a perforated lid comprising through holes for the passage of steam and gas towards the outside and of water vapor towards the inside, characterized in that the tank comprises a silver ion-based metal-ceramic layer adapted for at least partially covering the inside of the frying tank.

The fryer according to the present invention allows to prevent the harmful detachment of microparticles on one hand and to maintain an operating temperature, thanks to the Venturi effect, varying between 120°C/140°C on the other. As a result, the smoke point is not reached, thus preventing the oil from burning such as not to produce smoke but only steam, thus maintaining the integrity of foods and their nutritional properties and thus eliminating excess fats.

The frying resulting from the use of the fryer according to the present invention is healthy and does not create any type of problem for the health of men, especially for children who can finally consume fried dishes at will without affecting the gastric mucosa and without being harmful since the oil stays integral. Moreover, this type of fried food can also be consumed by diabetic people since it reduces fats and sugars.

In the aforesaid aspect, the present invention can have at least one of the preferred characteristics defined hereunder.

Advantageously, the silver ion-based metal-ceramic layer completely covers the inside of the frying tank.

Preferably, the silver ion-based metal-ceramic layer has a layer of between 50 µm and 300 µm.

Advantageously, the silver ion-based metal-ceramic layer is obtained by means of an anodic oxidation treatment, with a thickness of up to 150 µm, followed by the sealing of the microporosities of the anodic oxide by silver ions Ag+.

Conveniently, the frying tank is made of aluminum and has a thickness between 2 and 5 mm.

Advantageously, the fryer comprises a heat loss strip arranged around the frying tank. The heat loss strip is spaced at least 1 cm from the tank, by means of spacer elements.

Preferably, the frying tank has a circular cross section, the heat loss strip is circumferentially arranged around the frying tank and is spaced therefrom by means of five spacer elements angularly spaced from each other, each spacer element being arranged radially with respect to the center of said frying tank.

Conveniently, the heat loss strip has a height equal to at least 40% of the height H of said frying tank and is configured to completely envelop the frying tank in a circumferential direction.

Preferably, the heating assembly comprises at least one electric resistance, at least one electric power supply configured to heat the electric resistance and at least one temperature regulating element.

Conveniently, the heating assembly is removably mounted to the frying tank through fastening means.

Preferably, the heating assembly is at least partially arranged inside said frying tank.

Alternately, the heating assembly is arranged outside the frying tank so that to at least partially envelop it.

Also described herein but not forming part of the claimed invention, a system for coupling two or more fryers, as previously described, comprises a bar comprising removable constraining means spaced along the extent of the bar itself, said removable constraining means being configured to be reversibly coupled with corresponding removable constraining means present on the fryers as previously described.

Further characteristics and advantages of the invention will become clearer in the detailed description of some preferred, but not exclusive, embodiments of a fryer according to the present invention.

### Brief description of the drawings

Such description will be set forth hereunder with reference to the accompanying drawings, only provided by way of example and thus not limiting, in which:

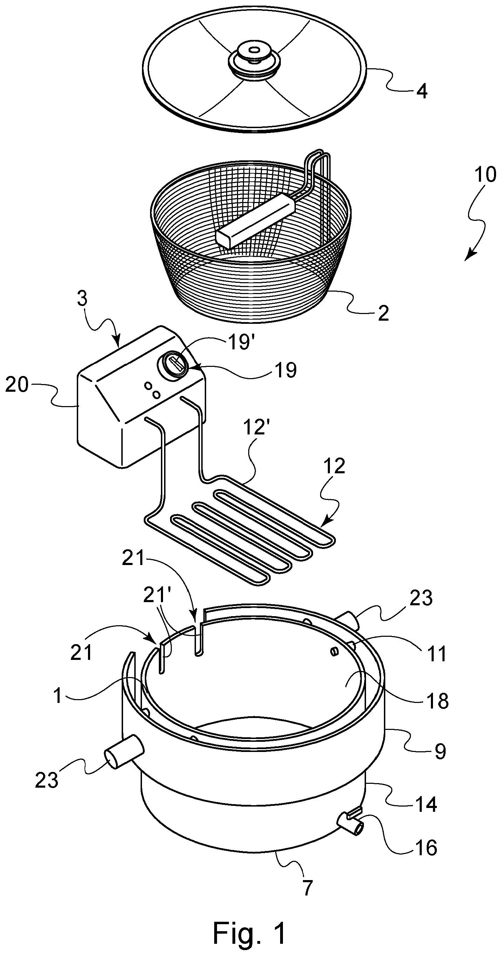

- figure 1 shows an exploded schematic view of the fryer according to the present invention;

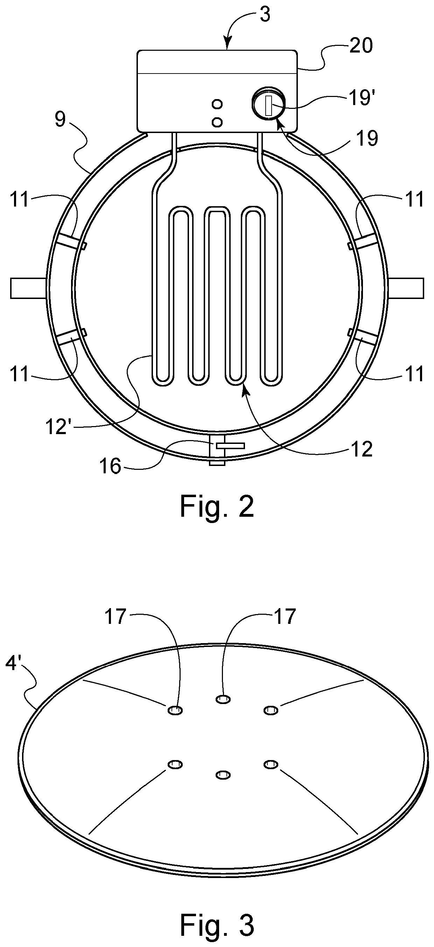

- figure 2 shows a top schematic view of the fryer of figure 1 with the lid removed;
- figure 3 shows a schematic perspective view of the lower plate of the lid of the fryer of figure 1; and

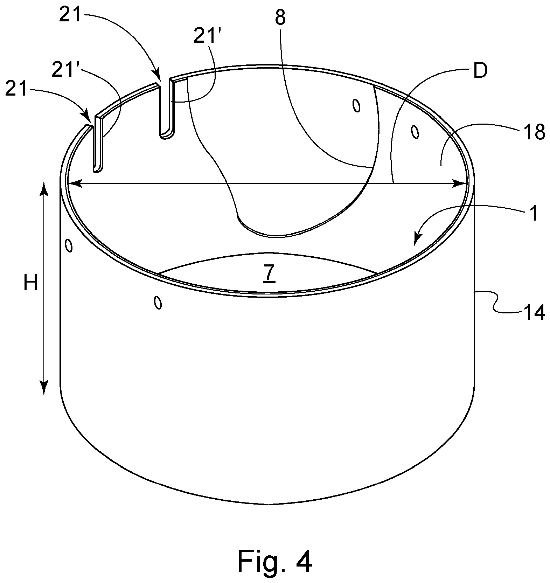

- figure 4 shows an enlarged schematic view of the frying tank of the fryer of figure 1.

### Detailed description of embodiments of the invention

With reference to the figures, a fryer according to the present invention is denoted by the numerical reference 10.

The fryer 10 has a frying tank 1 shaped to be filled with oil up to a predetermined maximum level, a basket 2 adapted to contain the food to be fried, a lid 4 and a heating assembly 3 preferably shaped to be at least partially arranged inside the frying tank 1 and to bring the oil to be fried to temperature.

Alternately, the heating assembly 3 could be arranged outside the frying tank and in contact with the latter to bring the oil to temperature.

By way of example, according to an embodiment not shown in the figures, the heating assembly 3 could be annular in shape with a diameter such as to encircle and at least partially be in contact with the frying tank 1.

In the embodiment shown in the figures, the frying tank 1 has a cylindrical shape with a substantially circular cross section, the frying tank is thus provided with a side wall 14 and a bottom wall 7.

The frying tank 1 has a height H measured externally with respect to a bottom wall 7.

In the embodiment shown in the figures, the frying tank 1 has a height H of between 15 cm and 25 cm, preferably of between 18 cm and 23 cm, for example of 20 cm.

Always with reference to the embodiment shown in the figures, the frying tank 1 has an inner diameter D of between 25 cm and 45 cm, preferably of between 30 cm and 40 cm.

The bottom wall 7 and the side wall 14 define an inner cavity 18 shaped to receive a predetermined amount of oil to be fried.

In the embodiment shown in the figures, the inner cavity 18 is sized to receive 10 liters of oil to be fried, but it could be sized to receive a greater or lesser amount of oil without thereby departing from the protection scope of the present invention.

The frying tank 1 is made of aluminum and has a thickness in the range of 2 to 5 mm, for example equal to 3 mm.

The frying tank 1 and in particular the inner surfaces of the side wall 14 and of the bottom wall 7 have a silver ion-based metal-ceramic layer 8.

Preferably, the entire bottom wall 7 and the entire side wall 14 are coated on their inner side, i.e. on the one facing the cavity 18, with a silver ion-based metal-ceramic layer.

The silver ion-based metal-ceramic layer 8 is obtained by means of a special hard anodic oxidation treatment, with a thickness of up to 150 µm, followed by the sealing of the microporosities of the anodic oxide by silver ions Ag+.

The silver ion-based metal-ceramic layer 8 that is formed has a thickness of between 50 µm and 300 µm.

The silver ion-based metal-ceramic layer 8 confers the following characteristics to the frying tank 1:
- high antibacterial and anti-mold capacity thanks to the silver ions;
- suitability to come into contact with all foods due to the total lack of transfers of metals to food, of toxic elements such as nickel, and of stainless steels;
- resistance to corrosion due to the lack of metal particles of any nature.

In the embodiment shown in the figures, the frying tank 1 has, in its lower portion, a tap 16 fluidically connected to the inside of the inner cavity 18 to empty the oil at the end of the frying process.

The fryer 1, as previously mentioned, has a heating assembly 9 to bring and maintain the oil at the appropriate frying temperature.

The heating assembly 9 has at least one electric resistance 12 formed by at least one coil 12', at least one electric power supply not directly shown in the figures and configured to bring power inside the coil 12' so that the latter converts it into heat and at least one temperature regulating element 19, for example a thermostat 19'.

The power supply and the thermostat are enclosed in a carter 20 from which the coil 12' also comes out.

In the embodiment shown in the figures, the heating assembly 9 is removably mounted on the frying tank 1, through appropriate removable fastening means 21, so that to allow the cleaning of the frying tank 1 in all of its parts. In the embodiment shown in the figures, two slots 21' of appropriate size obtained in the side wall 14 of the frying tank 1 are provided as removable fastening means 21.

The slots 21' are conveniently sized to allow to insert two lengths of the coil 12' inside them.

This way, the carter 20 abuts at least partially against the side wall 14, thus remaining in the upright position, i.e. with the thermostat 19' facing upwards and balanced, it being counterbalanced by the weight of the coil 12' weighting on the inside the frying tank 1.

Further removable fastening means 21 could be provided without departing from the protection scope of the present invention.

Moreover, the fryer has at least one heat loss strip 9 arranged around the frying tank 1 to disperse the heat and prevent people from coming into contact with the hottest part of the fryer 10, i.e. with the frying tank 1.

The heat loss strip 9 is made of a steel sheet wrapped around the frying tank 1 and conveniently spaced therefrom.

Preferably, the heat loss strip 9 has a height equal to at least 40% of the height H of the frying tank 1 and is configured to at least partially, preferably almost completely, envelop the frying tank 1 in a circumferential direction.

The heat loss strip 9 is circumferentially arranged around the frying tank 1 so that to envelop it completely, except for the length adapted to house the carter 20.

The heat loss strip 9 is spaced at least 1 cm from the frying tank 1, preferably 2 cm, maximum 10 cm.

The heat loss strip 9 is spaced from the frying tank 1 by means of spacer elements 11.

Preferably, the heat loss strip 9 is spaced from the frying tank 1 by means of at least five spacer elements 11, angularly spaced from each other. The spacer elements 11 are shaped like cylindrical bodies extending from the side wall 14 of the frying tank 1 and support the heat loss strip 9.

The spacer elements 11 can be made of steel.

In the embodiment shown in the figures, each spacer element 11 is arranged radially with respect to the center of the frying tank 1.

The fryer 1 further has a lid 4 having through holes 17 for the passage of steam and gas towards the outside and of water vapor towards the inside.

The lid has means for cooling and condensing the steam passing through the through holes 17, and means for supporting said steam cooling means.

Preferably, the steam cooling means consist, starting from the frying tank 1 and upwards, of a lower perforated plate 4', of at least one intermediate perforated plate not shown in the figures, and of a non-perforated upper plate.

The means for supporting the steam cooling means in turn consist of a lower spacer element interposed between the lower plate 4' and the intermediate plate and of an upper spacer element interposed between the intermediate plate and the upper plate.

The lid provided with the six through holes 17 allows the inflow of air and the outflow of excess water vapor, thus favoring a perfect environment for frying and substantially never allowing to reach the smoke point of the oil.

In other words, the through holes 17 allow to activate a system that exploits Venturi's physical effect (incoming atmospheric pressure; outgoing water vapor generated by immersing the food in the oil: all causing ventilation and steam inside the tank which limit the temperature and allow the food to be cooked perfectly without burning).

This lid combined with the frying tank 1 has the following advantages:
- it does not subject oil to thermal stress, since the smoke point thereof is not reached, the oil consequently does not suffer any burning process;
- it prevents fumes of unpleasant smells;
- it maintains the organoleptic properties of foods unaltered;
- it prevents the formation of Acrolein and Acrylamide, toxic and cancerous substances produced when frying with traditional methods;
- it ensures a crispy, light and unburned frying;
- it allows to reuse the oil several times without suffering decreases, thus reducing the cooking times and consequently the costs.

The thermal conditions described above allow to fry different types of foods contemporaneously (fish/meat/vegetables/starchy foods) without breaking the molecules of the oil, including extra virgin, which does not thus deteriorate and suffer taste mixing processes, especially as far as fish is concerned, in addition to using the same oil for six or seven frying and, following the filtering, for cold seasoning.

The fryer described above could be removably combined with other fryers of the same type so that to cook different products and/or amounts of products contemporaneously.

For this, a system to couple two or more fryers as previously described can be provided. The system can comprise a bar provided with removable constraining means spaced along the extent of the bar itself. The removable constraining means are configured to be reversibly coupled with corresponding removable constraining means present on the fryers as previously described.

The bar could have two slots as constraining means and adapted to engage corresponding pins present as corresponding constraining means on each fryer 10.

Different removable constraining means can further be provided.

The bar could further extend according to a curvilinear profile so that to reduce the sizes of the system.

Several changes can be made to the embodiments described in detail, anyhow remaining within the protection scope of the invention, insofar as they are encompassed by the following claims.

## Claims

1. Fryer (10) comprising:
- a frying tank (1), shaped to be filled with oil up to a predetermined maximum level; said frying tank (1) having a height H measured with respect to a bottom wall (7), said frying tank (1) being provided with at least one basket (2) to contain the food to be fried;
- a heating assembly (3);
- a perforated lid (4) comprising through holes (17) for the passage of steam and gas towards the outside and of water vapor towards the inside, **characterized in that** said frying tank (1) comprises a silver ion-based metal-ceramic layer (8) adapted for at least partially covering the inside of the frying tank.

2. Fryer (10) according to claim 1, **characterized in that** said silver ion-based metal-ceramic layer (8) completely covers the inside of the frying tank (1).

3. Fryer (10) according to claim 1, **characterized in that** said silver ion layer (8) has a thickness between 50 µm and 300 µm.

4. Fryer (10) according to claim 1, **characterized in that** said silver ion-based metal-ceramic layer (8) is obtained by means of an anodic oxidation treatment, with a thickness of up to 150 µm, followed by the sealing of the microporosities of the anodic oxide by silver ions (Ag+).

5. Fryer (10) according to claim 1, **characterized in that** said frying tank (1) is made of aluminum with a thickness between 2 and 5 mm.

6. Fryer (10) according to claim 1, **characterized by** comprising a heat loss strip (9) arranged around said frying tank (1) and spaced at least 1 cm therefrom, by means of spacer elements (11).

7. Fryer (10) according to claim 6, **characterized in that** said frying tank (1) has a circular cross section, said heat loss strip (9) is circumferentially arranged around said frying tank (1) and is spaced therefrom by means of at least five spacer elements (11) angularly spaced from each other, each spacer element (11) being arranged radially with respect to a center of said frying tank (1).

8. Fryer (10) according to claim 6 or 7, **characterized in that** said heat loss strip (9) has a height equal to at least 40% of the height H of said frying tank (15) and is configured to at least partially envelop said frying tank (1) in a circumferential direction.

9. Fryer (10) according to claim 1, **characterized in that** said heating assembly (3) comprises at least one electric resistance (12), at least one electric power supply configured to heat the electric resistance (12) and at least one temperature regulating element (19).

10. Fryer (10) according to claim 1, **characterized in that** said heating assembly is removably mounted to said frying tank (1) through fastening means (21).

11. Fryer (10) according to claim 1, **characterized in that** a heating assembly (3) is arranged at least partially inside said frying tank (1).

12. Fryer (10) according to any one of claims 1 to 10, **characterized in that** the heating assembly is arranged outside said frying tank (1) so that to at least partially envelop it.

## Patentansprüche

1. Fritteuse (10) umfassend:
- einen Frittierbehälter (1), der dazu geformt ist, mit Öl bis zu einem vorbestimmten Maximalfüllstand gefüllt zu werden; wobei der Frittierbehälter (1) eine Höhe H, gemessen bezüglich einer Bodenwand (7), aufweist, wobei der Frittierbehälter (1) mit mindestens einem Korb (2) zum Aufnehmen der zu frittierenden Lebensmittel versehen ist;
- eine Heizanordnung (3);
- einen gelochten Deckel (4) umfassend Durchgangslöcher (17) für den Durchgang von Dampf und Gas nach außen und von Wasserdampf nach innen, **dadurch gekennzeichnet, dass** der Frittierbehälter (1) eine metallkeramische Schicht (8) auf Silberionenbasis umfasst, die zum zumindest teilweisen Abdecken des Inneren des Frittierbehälters geeignet ist.

2. Fritteuse (10) nach Anspruch 1, **dadurch gekennzeichnet, dass** die metallkeramische Schicht (8) auf Silberionenbasis das Innere des Frittierbehälters (1) vollständig bedeckt.

3. Fritteuse (10) nach Anspruch 1, **dadurch gekennzeichnet, dass** die Silberionenschicht (8) eine Dicke zwischen 50 µm und 300 µm aufweist.

4. Fritteuse (10) nach Anspruch 1, **dadurch gekennzeichnet, dass** die metallkeramische Schicht (8) auf Silberionenbasis durch eine anodische Oxidationsbehandlung mit einer Dicke bis zu 150 µm erhalten wird, gefolgt von der Versiegelung der Mikroporositäten des anodischen Oxids durch Silberionen (Ag+).

5. Fritteuse (10) nach Anspruch 1, **dadurch gekennzeichnet, dass** der Frittierbehälter (1) aus Aluminium mit einer Dicke zwischen 2 und 5 mm hergestellt ist.

6. Fritteuse (10) nach Anspruch 1, **gekennzeichnet durch** das Umfassen eines Wärmeabfuhrstreifens (9), der um den Frittierbehälter (1) herum und davon mindestens 1 cm mittels Distanzelementen (11) beabstandet angeordnet ist.

7. Fritteuse (10) nach Anspruch 6, **dadurch gekennzeichnet, dass** der Frittierbehälter (1) einen kreisförmigen Querschnitt aufweist, dass der Wärmeabfuhrstreifen (9) umfänglich um den Frittierbehälter (1) herum angeordnet ist und davon mittels mindestens fünf voneinander winkelbeabstandeter Distanzelemente (11) beabstandet ist, wobei jedes Distanzelement (11) radial bezüglich eines Mittelpunkts des Frittierbehälters (1) angeordnet ist.

8. Fritteuse (10) nach Anspruch 6 oder 7, **dadurch gekennzeichnet, dass** der Wärmeabfuhrstreifen (9) eine Höhe aufweist, die mindestens 40 % der Höhe H des Frittierbehälters (15) entspricht, und so konfiguriert ist, dass er den Frittierbehälter (1) in einer Umfangsrichtung zumindest teilweise umhüllt.

9. Fritteuse (10) nach Anspruch 1, **dadurch gekennzeichnet, dass** die Heizanordnung (3) mindestens einen elektrischen Widerstand (12), mindestens eine elektrische Stromversorgung, die zum Aufheizen des elektrischen Widerstands (12) konfiguriert ist, und mindestens ein Temperaturregelelement (19) umfasst.

10. Fritteuse (10) nach Anspruch 1, **dadurch gekennzeichnet, dass** die Heizanordnung durch Befestigungsmittel (21) am Frittierbehälter (1) lösbar angebracht ist.

11. Fritteuse (10) nach Anspruch 1, **dadurch gekennzeichnet, dass** eine Heizanordnung (3) zumindest teilweise innerhalb des Frittierbehälters (1) angeordnet ist.

12. Fritteuse (10) nach einem der Ansprüche 1 bis 10, **dadurch gekennzeichnet, dass** die Heizanordnung außerhalb des Frittierbehälters (1) derart angeordnet ist, dass sie diesen zumindest teilweise umhüllt.

## Revendications

1. Friteuse (10) comprenant:
- une cuve de friture (1), conformée pour être remplie d'huile jusqu'à un niveau maximum prédéterminé; ladite cuve de friture (1) ayant une hauteur H mesurée par rapport à une paroi de fond (7), ladite cuve de friture (1) étant pourvue d'au moins un panier (2) pour contenir les aliments à frire;
- un ensemble chauffant (3);
- un couvercle perforé (4) comprenant des trous traversants (17) pour le passage de vapeur et de gaz vers l'extérieur et de vapeur d'eau vers l'intérieur, **caractérisée en ce que** ladite cuve de friture (1) comprend une couche métallo-céramique à base d'ions d'argent (8) adaptée pour au moins partiellement recouvrir l'intérieur de la cuve de friture.

2. Friteuse (10) selon la revendication 1, **caractérisée en ce que** ladite couche métallo-céramique à base d'ions d'argent (8) recouvre entièrement l'intérieur de la cuve de friture (1).

3. Friteuse (10) selon la revendication 1, **caractérisée en ce que** ladite couche d'ions d'argent (8) présente une épaisseur comprise entre 50 µm et 300 µm.

4. Friteuse (10) selon la revendication 1, **caractérisée en ce que** ladite couche métallo-céramique à base d'ions d'argent (8) est obtenue au moyen d'un traitement d'oxydation anodique d'une épaisseur allant jusqu'à 150 µm, suivi du scellement des microporosités de l'oxyde anodique par des ions d'argent (Ag+).

5. Friteuse (10) selon la revendication 1, **caractérisée en ce que** ladite cuve de friture (1) est réalisée en aluminium avec une épaisseur comprise entre 2 et 5 mm.

6. Friteuse (10) selon la revendication 1, **caractérisée en ce qu'**elle comprend une bande de perte de chaleur (9) disposée autour de ladite cuve de friture (1) et espacée d'au moins 1 cm de la même au moyen d'éléments d'espacement (11).

7. Friteuse (10) selon la revendication 6, **caractérisée en ce que** ladite cuve de friture (1) présente une section transversale circulaire, ladite bande de perte de chaleur (9) est disposée circonférentiellement autour de ladite cuve de friture (1) et est espacée de la même au moyen d'au moins cinq éléments d'espacement (11) espacés angulairement les uns des autres, chaque élément d'espacement (11) étant disposés radialement par rapport à un centre de ladite cuve de friture (1).

8. Friteuse (10) selon la revendication 6 ou 7, **caractérisée en ce que** ladite bande de perte de chaleur (9) présente une hauteur égale à au moins 40% de la hauteur H de ladite cuve de friture (15) et est configurée pour au moins partiellement envelopper ladite cuve de friture (1) dans une direction circonférentielle.

9. Friteuse (10) selon la revendication 1, **caractérisée en ce que** ledit ensemble chauffant (3) comprend au moins une résistance électrique (12), au moins une alimentation électrique configurée pour chauffer la résistance électrique (12) et au moins un élément de régulation de la température (19).

10. Friteuse (10) selon la revendication 1, **caractérisée en ce que** ledit ensemble chauffant est monté de manière amovible sur ladite cuve de friture (1) par des moyens de fixation (21).

11. Friteuse (10) selon la revendication 1, **caractérisée en ce qu'**un ensemble chauffant (3) est disposé au moins partiellement à l'intérieur de ladite cuve de friture (1).

12. Friteuse (10) selon l'une quelconque des revendications 1 à 10, **caractérisée en ce que** l'ensemble chauffant est disposée à l'extérieur de ladite cuve de friture (1) de manière à l'envelopper partiellement.
